# EUROPÄISCHE PATENTANMELDUNG

(11) **EP 3 588 019 A1**
(43) Veröffentlichungstag der Anmeldung: **01.01.2020**
(21) Anmeldenummer: 18180180.4
(22) Anmeldetag: 27.06.2018
(51) Int. Cl.: G01F 23/00

(54) **SENSORVORRICHTUNG ZUM ERFASSEN EINER ÄNDERUNG EINES FÜLLSTANDES IN EINEM FÜLLMITTELBEHÄLTER UND VERFAHREN DAZU**

(71) Anmelder: Baumer Electric AG, 8500 Frauenfeld (CH)
(72) Erfinder: Schmid, Daniel, 8542 Wiesendangen (CH)
(74) Vertreter: Strauss, Steffen

(57) **Zusammenfassung**

Die Offenbarung betrifft eine Sensorvorrichtung zum Erfassen einer Änderung eines Füllstandes eines Füllmittels in einem Füllmittelbehälter, mit einem Sensor, welcher ausgebildet ist, Messwerte einer Messgröße zu erfassen, um eine Mehrzahl von erfassten Messwerten zu erhalten, wobei ein Wert der Messgröße von dem Füllstand des Füllmittels abhängig ist, einem Prozessor, welcher ausgebildet ist, eine Änderungsrate der Messgröße innerhalb eines vorbestimmten Zeitintervalls anhand der Mehrzahl der erfassten Messwerte zu bestimmen, wobei der Prozessor ferner ausgebildet ist, die bestimmte Änderungsrate mit einem vorbestimmten Schwellwert zu vergleichen und ein Änderungssignal auszugeben, falls die Änderungsrate den vorbestimmten Schwellwert erreicht.

## Beschreibung

### Technisches Gebiet

Die vorliegende Erfindung betrifft eine Sensorvorrichtung, insbesondere eine Sensorvorrichtung zum Erfassen einer Änderung eines Füllstandes eines Füllmittels in einem Füllmittelbehälter über die Präsenz/Absenz des Füllmittels auf einer bestimmten Höhe des Behältnisses.

### Technischer Hintergrund

Füllstandmessvorrichtungen dienen dazu, den Füllstand eines Füllmittels in einem Füllmittelbehälter zu bestimmen, und kommen für gewöhnlich in Tanks oder Silos zum Einsatz, in denen entsprechende Füllmittel gelagert werden. Unter Füllmitteln sind in diesem Zusammenhang jegliche Stoffe in flüssiger, granulatförmiger, pulverförmiger, pelletförmiger oder vergleichbarer Gestalt zu verstehen, die in großen Einheiten in Tanks, Silos und vergleichbaren Behältern gelagert werden. Aus dem Stand der Technik sind verschiedene Lösungen zur Füllstandmessung bekannt. Diese sind jedoch für gewöhnlich auf eine oder vergleichbare Füllmittelarten beschränkt, sodass für unterschiedliche Füllmittel für gewöhnlich unterschiedliche Füllstandmessvorrichtungen benötigt werden. Darüber hinaus besteht bei Füllstandmessvorrichtungen, die den Füllstand des Füllmittels über die Messung einer bezüglich des jeweiligen Füllmittels sensitiven Messgröße bestimmen, das Problem, dass Grenzschicht-nahe Schichten des Füllmittels und der Luft veränderte Eigenschaften zu Grenzschicht-fernen Schichten aufweisen, was sich wiederum in den jeweiligen Messungen der Messgröße niederschlägt und zu Messungenauigkeiten oder Fehlmessungen führen kann.

Es ist daher die Aufgabe der vorliegenden Erfindung, eine verbesserte Sensorvorrichtung zum Erfassen einer Änderung eines Füllstandes eines Füllmittels in einem Füllmittelbehälter und ein Verfahren dazu bereitzustellen.

Diese Aufgabe wird durch die Gegenstände der unabhängigen Ansprüche gelöst. Vorteilhafte Ausführungsformen der Erfindung sind Gegenstand der abhängigen Ansprüche, der Beschreibung sowie der beiliegenden Figuren.

Die Offenbarung basiert auf der Erkenntnis, dass die obige Aufgabe über eine Sensorvorrichtung gelöst wird, die es ermöglicht, anhand einer Änderungsrate einer Messgröße eine Änderung eines Füllstands eines Füllmittels in einem Füllmittelbehälter zu bestimmen.

Nach einem Aspekt wird die erfindungsgemäße Aufgabe durch eine Sensorvorrichtung zum Erfassen einer Änderung eines Füllstandes eines Füllmittels in einem Füllmittelbehälter gelöst, mit einem Sensor, welcher ausgebildet ist, Messwerte einer Messgröße zu erfassen, um eine Mehrzahl von erfassten Messwerten zu erhalten, wobei ein Wert der Messgröße von dem Füllstand des Füllmittels abhängig ist. Ferner ist ein Prozessor vorgesehen, welcher ausgebildet ist, eine Änderungsrate der Messgröße innerhalb eines vorbestimmten Zeitintervalls anhand der Mehrzahl der erfassten Messwerte zu bestimmen, wobei der Prozessor ferner ausgebildet ist, die bestimmte Änderungsrate mit einem vorbestimmten Schwellwert zu vergleichen und ein Änderungssignal auszugeben, falls die Änderungsrate den vorbestimmten Schwellwert erreicht.

Hierdurch wird der technische Vorteil erreicht, dass die Sensorvorrichtung für unterschiedliche Füllmittel einsetzbar ist. Ferner wird der technische Vorteil erreicht, dass durch die Verwendung der Änderungsrate der Messgröße zur Bestimmung einer Änderung des Füllstands des Füllmittels Fehlmessungen vermieden werden können, die auf Grenzschichteffekte, wie beispielsweise Ablagerungen, zurückzuführen sind. An der Grenzschicht zwischen Füllmittel und Luft erfahren sowohl das Füllmittel als auch die direkt an der Grenzschicht befindliche Luft Veränderungen ihrer spezifischen Eigenschaften. So kann beispielsweise das Füllmittel in der Luft befindliche Feuchtigkeit aufnehmen. Auf der anderen Seite können beispielsweise Partikel des Füllmittels in die Luft diffundieren. Beide Effekte können die spezifischen Eigenschaften der Grenzschicht-nahen Schichten von Füllmittel und Luft gegenüber den Grenzschicht-fernen Schichten von Füllmittel und Luft verändern, sodass Messungen der Messgröße dem geschuldet substantielle Unterschiede zwischen Grenzschicht-nahen und Grenzschicht-fernern Schichten aufweisen können.

Dadurch, dass erfindungsgemäß zur Bestimmung einer Änderung des Füllstands des Füllmittels ausschließlich die Änderungsrate der Messgröße gegenüber der Zeit Berücksichtigung findet der tatsächliche Wert der Messgröße hingegen unberücksichtigt bleibt, spielen die spezifischen Veränderungen der Grenzschicht-nahen Schichten des Füllmittels und der Luft keine Rolle, solange diese, wie üblich, geringe Änderungsraten aufweisen und keine sprunghaften Eigenschaftsänderungen auftreten.

Indem nur Änderungsraten einer vorbestimmten Größe mit einer Änderung des Füllstands des Füllmittels interpretiert werden, können entsprechend geringe Änderungsraten, die auf die spezifischen Veränderungen der Grenzschicht-nahen Schichten des Füllmittels und der Luft zurückzuführen sind, nicht zu Verfälschung der Messergebnisse führen.

Nach einer Ausführungsform ist der Prozessor ausgebildet, das Änderungssignal nur dann auszugeben, wenn zumindest zwei aufeinanderfolgende erfasste Messwerte oder wenn aufeinanderfolgende erfasste Messwerte innerhalb des vorbestimmten Zeitintervalls gleich und gegebenenfalls gekoppelt mit einem Toleranzband sind. Hierdurch wird der technische Vorteil erreicht, dass Fluktuationen der Messwerte in der Analyse nicht berücksichtigt werden und somit Fehlmessungen vermieden werden können. Über den Vergleich aufeinanderfolgender Messwerte innerhalb eines vorbestimmten Zeitintervalls wird ein Stabilitätskriterium eingeführt. Eine Änderung der Messwerte von einem ersten Messwertniveau auf ein zweites Messwertniveau wird somit nur dann als tatsächliche Änderung der Messgröße verbucht, wenn die Messwerte für das vorbestimmte Zeitintervall auf dem zweiten Messwertniveau stabilisiert sind.

Nach einer Ausführungsform sind der Sensor oder der Prozessor ausgebildet, die Mehrzahl der erfassten Messwerte auf einen Referenzmesswert zu normieren. Hierdurch wird der Vorteil erreicht, dass Messwerte verschiedener Messreihen, beispielsweise auch bei unterschiedlichen Füllmitteln, miteinander vergleichbar sind. Da erfindungsgemäß lediglich die Änderungsrate der Messgröße nicht jedoch deren Absolutwert von Interesse ist, ermöglicht die Normierung der Messwerte für unterschiedliche Füllmittel den identischen vorbestimmten Schwellwert für die Änderungsrate zu verwenden.

Nach einer Ausführungsform ist der Referenzmesswert ein Messwert der Messgröße bei Füllmittel-freiem Füllmittelbehälter. Hiermit wird der Vorteil eines Füllmittel-unabhängigen Referenzwerts erreicht.

Nach einer Ausführungsform ist der Sensor oder der Prozessor ausgebildet, diejenigen erfassten Messwerte zu verwerfen, welche einen vorbestimmten Schwellwert überschreiten. Hierdurch wird der technische Vorteil erreicht, dass die Menge an der in der Analyse zu berücksichtigenden Messwerte reduziert werden kann, um so den Analyseprozess zu erleichtern und zu beschleunigen.

Nach einer Ausführungsform ist der vorbestimmte Schwellwert von einem Messwert der Messgröße bei Füllmittel-freiem Füllmittelbehälter abhängig, insbesondere ein Anteil des Messwertes der Messgröße bei Füllmittel-freiem Füllmittelbehälter. Hierdurch wird der technische Vorteil erreicht, dass Messwerte, die erfahrungsgemäß einem leeren Füllmittelbehälter entsprechen aus der Analyse ausgeschlossen werden können.

Nach einer Ausführungsform ist der Prozessor ferner ausgebildet, ein Änderungssignal nur dann auszugeben, wenn die Änderungsrate einen vorbestimmten Änderungsratenverlauf aufweist, insbesondere einen Änderungsratenverlauf mit einer vorbestimmten, insbesondere negativen, Steigung. Hierdurch wird der technische Vorteil erreicht, dass Fehlmeldungen einer Änderung des Füllstandes des Füllmittels vermieden werden können.

Nach einer Ausführungsform ist die Messgröße eine elektrische Leitfähigkeit, ein Absorptionsvermögen und/oder Reflexionsvermögen von elektromagnetischer Strahlung, eine Resonanzfrequenz, eine Dichte, ein Druck, eine Feuchtigkeit, eine Schallleitfähigkeit, eine Dielektrizitätskonstante oder vergleichbares. Hierdurch wird der technische Vorteil erreicht, dass die den Anforderungen entsprechende Messgröße auswählbar ist. Somit kann der Einsatzbereich der Sensorvorrichtung erhöht werden.

Nach einer Ausführungsform ist das Füllmittel eine Flüssigkeit oder ein Granulat oder ein Futtermittel oder Pellets oder Pulver. Hierdurch wird der technische Vorteil erreicht, dass die Sensorvorrichtung für eine große Anzahl verschiedener Füllmittel einsetzbar ist.

Nach einer Ausführungsform umfasst die Sensorvorrichtung ferner eine Anzeigeeinrichtung, insbesondere eine optische und/oder akustische Anzeigeeinrichtung, welche ausgebildet ist, einen Hinweis auf die Änderungsrate oder auf einen Füllstand des Füllmittels anzuzeigen. Hierdurch wird der technische Vorteil erreicht, dass dem Nutzer eine Änderung des Füllstands mitgeteilt werden kann, sodass dieser den Verlauf verfolgen kann. Auch kann der Nutzer über eine unerwartete Änderung des Füllstands alarmiert werden, sodass dieser gegebenenfalls ein damit verbundenes Problem rechtzeitig beheben kann.

Nach einer Ausführungsform ist der Sensor in einer ersten Höhe in dem Füllmittelbehälter angeordnet und vorgesehen, die Änderung des Füllmittelstandes in einem ersten Höhenbereich des Füllbehälters zu erfassen, wobei die Sensorvorrichtung einen zweiten Sensor aufweist, welcher in einer zweiten Höhe des Füllmittelbehälters angeordnet und vorgesehen ist, zweite Messwerte der Messgröße in einem zweiten Höhenbereich zu erfassen, um eine zweite Mehrzahl von erfassten zweiten Messwerten zu erhalten, wobei ein Wert der Messgröße von dem Füllstand des Füllmittels abhängig ist, wobei der Prozessor ausgebildet ist, eine Änderungsrate der Messgröße innerhalb eines weiteren vorbestimmten Zeitintervalls anhand der zweiten Mehrzahl der erfassten zweiten Messwerte zu bestimmen, und wobei der Prozessor ferner ausgebildet ist, die bestimmte Änderungsrate mit dem vorbestimmten Schwellwert zu vergleichen und das Änderungssignal auszugeben, falls die Änderungsrate den Schwellwert erreicht.

Hierdurch wird der technische Vorteil erreicht, dass ein Füllstand oder eine Änderung des Füllstands eines Füllmittels über eine vorbestimmte Distanz innerhalb des Füllmittelbehälters verfolgbar ist. Somit ist der Füllstand durch den Nutzer über einen ausgedehnten Beobachtungsbereich, beispielsweise den vollständigen Füllmittelbehälter, verfolgbar.

Nach einem zweiten Aspekt wird die erfindungsgemäße Aufgabe durch ein Verfahren zum Erfassen einer Änderung eines Füllstandes eines Füllmittels in einem Füllmittelbehälter gelöst, mit
- einem Erfassen von Messwerten einer Messgröße, um eine Mehrzahl von erfassten Messwerten zu erhalten, wobei ein Wert der Messgröße von dem Füllstand des Füllmittels abhängig ist,
- einem Bestimmen einer Änderungsrate der Messgröße innerhalb eines vorbestimmten Zeitintervalls anhand der Mehrzahl der erfassten Messwerte,
- einem Vergleichen der bestimmten Änderungsrate mit einem vorbestimmten Schwellwert, und
- einem Ausgeben eines Änderungssignals, falls die Änderungsrate den Schwellwert erreicht.
Hierdurch wird der technische Vorteil eines einfach durchzuführenden Messverfahrens erreicht, das ein Bestimmen einer Änderung eines Füllstands für verschiedene Füllmittel und unterschiedliche Messgrößen ermöglicht. Das Verfahren ist unabhängig von der zur Messung verwendeten Messgröße und kann folglich für eine Großzahl unterschiedlicher Füllmittel angewendet werden. Auch ist das Verfahren mit bereits bestehenden Füllstandmessvorrichtungen kompatibel. Durch die Verwendung der Änderungsrate der jeweiligen Messgröße gegen die Zeit, sprich den Gradienten der jeweiligen Messgröße, als Parameter zur Bestimmung einer Änderung des Füllstands können Fehlmessungen vermieden werden, die bei Messungen der Absolutwerte der Messgröße durch charakteristische Veränderungen der Grenzschicht-nahen Schichten des Füllmittels und der Luft hervorgerufen werden können.

Nach einer Ausführungsform umfasst der Schritt des Erfassens von Messwerten einer Messgröße das Normieren der erfassten Messwerte auf einen Referenzmesswert, wobei der Referenzmesswert ein Messwert der Messgröße bei Füllmittel-freiem Füllmittelbehälter ist. Hierdurch wird wiederum der Vorteil erreicht, dass Messwerte verschiedener Messreihen, beispielsweise auch bei unterschiedlichen Füllmitteln, miteinander vergleichbar sind. Da erfindungsgemäß lediglich die Änderungsrate der Messwerte nicht jedoch deren Absolutwert von Interesse ist, ermöglicht die Normierung der Messwerte für unterschiedliche Füllmittel den identischen vorbestimmten Schwellwert für die Änderungsrate zu verwenden. Somit kann das Verfahren unverändert für unterschiedliche Füllmittel verwendet werden.

Nach einer Ausführungsform umfasst der Schritt des Erfassens von Messwerten einer Messgröße ein Ermitteln, ob zumindest zwei aufeinanderfolgende erfasste Messwerte innerhalb des vorbestimmten Zeitintervalls gleich sind. Hierdurch wird wiederum der technische Vorteil erreicht, dass Fluktuationen der Messwerte in der Analyse nicht berücksichtigt werden und somit Fehlmessungen vermieden werden können. Über den Vergleich aufeinanderfolgender Messwerte innerhalb eines vorbestimmten Zeitintervalls wird ein Stabilitätskriterium eingeführt. Eine Änderung der Messwerte von einem ersten Messwertniveau auf ein zweites Messwertniveau wird somit nur dann als tatsächliche Änderung verbucht, wenn die Messwerte für das vorbestimmte Zeitintervall auf dem zweiten Messwertniveau stabilisiert sind.

Nach einer Ausführungsform umfasst der Schritt des Erfassens von Messwerten einer Messgröße das Verwerfen derjenigen Messwerte, welche einen vorbestimmten Schwellwert überschreiten, und wobei der vorbestimmte Schwellwert von einem Messwert der Messgröße bei Füllmittel-freiem Füllmittelbehälter abhängig, insbesondere ein Anteil des Messwertes der Messgröße bei Füllmittel-freiem Füllmittelbehälter ist. Hierdurch wird wiederum der technische Vorteil erreicht, dass die Menge an der in der Analyse zu berücksichtigenden Messwerte reduziert werden kann, um so den Analyseprozess zu erleichtern und zu beschleunigen, indem Messwerte, die erfahrungsgemäß einem leeren Füllmittelbehälter entsprechen aus der Analyse ausgeschlossen werden können.

### Beschreibung der Figuren

Ausführungsbeispiele der Erfindung sind in den Zeichnungen dargestellt und werden im Folgenden näher beschrieben.

Es zeigen:
- Fig. 1: eine schematische Seitenansicht der Sensorvorrichtung zum Erfassen einer Änderung eines Füllstandes eines Füllmittels in einem Füllmittelbehälter;
- Fig. 2: eine schematische Seitenansicht der Sensorvorrichtung gemäß einer weiteren Ausführungsform;
- Fig. 3: ein Messgröße-Zeit-Diagramm und
- Fig. 4: ein Blockdiagramm des Verfahrens zum Erfassen einer Änderung eines Füllstandes eines Füllmittels in einem Füllmittelbehälter gemäß einer Ausführungsform.

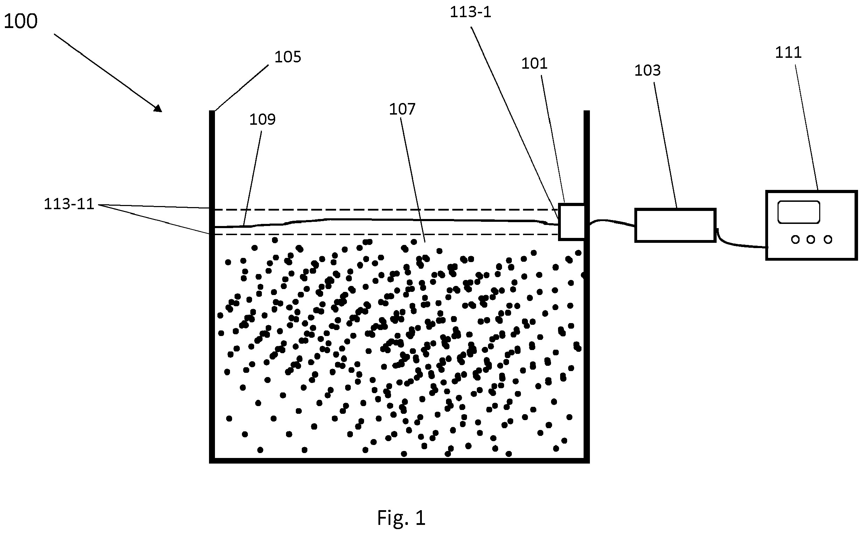

Fig. 1 zeigt eine schematische Seitenansicht der Sensorvorrichtung 100 gemäß einer Ausführungsform.
Gemäß Fig. 1 umfasst die Sensorvorrichtung 100 zum Erfassen einer Änderung eines Füllstandes 109 eines Füllmittels 107 in einem Füllmittelbehälter 105 einen Sensor 101, welcher ausgebildet ist, Messwerte x0, x1, x2, x3, x4, x5, x6, x7, x8, x9, x10, x11, x12 einer Messgröße X zu erfassen, um eine Mehrzahl von erfassten Messwerten x0, x1, x2, x3, x4, x5, x6, x7, x8, x9, x10, x11, x12 zu erhalten, wobei ein Wert der Messgröße X von dem Füllstand 109 des Füllmittels 107 abhängig ist, und einen Prozessor 103, welcher ausgebildet ist, eine Änderungsrate Dx12, Dx34 der Messgröße X innerhalb eines vorbestimmten Zeitintervalls Dt anhand der Mehrzahl der erfassten Messwerte x0, x1, x2, x3, x4, x5, x6, x7, x8, x9, x10, x11, x12 zu bestimmen. Der Prozessor 103 ist ferner ausgebildet, die bestimmte Änderungsrate Dx12, Dx34 mit einem vorbestimmten Schwellwert DX zu vergleichen und ein Änderungssignal auszugeben, falls die Änderungsrate Dx12, Dx34 den Schwellwert DX erreicht.

Gemäß einer Ausführungsform kann durch den Sensor 101, welcher in einer ersten Höhe 113-1 am Füllmittelbehälter 105 angeordnet ist, für einen entsprechenden Höhenbereich 113-11 eine Änderung des in diesem Höhenbereich 113-11 befindlichen Füllmittels 107 beobachtet werden. Hierzu erfasst der Sensor eine Mehrzahl von Messwerten x0, x1, x2, x3, x4, x5, x6, x7, x8, x9, x10, x11, x12 einer bestimmten Messgröße X, die es ermöglicht, ein bestimmtes Füllmittel 107 zu detektieren.

Die aufgenommenen Messwerte x0, x1, x2, x3, x4, x5, x6, x7, x8, x9, x10, x11, x12 werden vom Sensor 101 an den Prozessor 103 übermittelt, der die übermittelten Messwerte x0, x1, x2, x3, x4, x5, x6, x7, x8, x9, x10, x11, x12 einer Auswertung unterzieht. Hierzu werden durch den Prozessor 103 Änderungsraten Dx12, Dx34 erstellt, die die Änderung der jeweiligen Messwerte x0, x1, x2, x3, x4, x5, x6, x7, x8, x9, x10, x11, x12 über ein vorbestimmtes Zeitintervall Dt beschreiben. Die bestimmten Änderungsraten Dx12, Dx34 entsprechenden den Änderungen der Messgröße X nach der Zeit t über ein vorbestimmtes Zeitintervall Dt und sind dem Gradienten der Messgröße X nach der Zeit t gleichzusetzen. Diese Änderungsraten Dx12, Dx34 werden durch den Prozessor 103 mit einem entsprechenden Schwellwert DX verglichen, der einen vorbestimmten Grenzwert für die Änderungsraten Dx12, Dx34 bestimmt. Für die Messwerte x0, x1, x2, x3, x4, x5, x6, x7, x8, x9, x10, x11, x12, die eine Änderungsrate Dx12, Dx34 aufweisen, die den Schwellwert DX übersteigt, sich also eine größere und/oder schnellere Änderung der Messgröße X ergibt, als dies durch den Schwellwert DX bestimmt ist, wird durch den Prozessor 103 eine Änderung des Füllstands 105 des Füllmittels 107 in dem durch den Sensor 101 beobachteten Höhenbereich 113-11 festgestellt. Liegt die Änderungsrate Dx12, Dx34 hingegen unterhalb des Schwellwerts DX, interpretiert der Prozessor 103 die zeitlichen Änderungen der Messwerte x0, x1, x2, x3, x4, x5, x6, x7, x8, x9, x10, x11, x12 nicht als eine Änderung des Füllstands 109 des Füllmittels 107.

Zur Vermeidung, dass fehlerbehaftete Messwerte x0, x1, x2, x3, x4, x5, x6, x7, x8, x9, x10, x11, x12 oder durch spezifische Eigenschaften des Füllmittels 107 oder entsprechenden Eigenschaften der jeweiligen Messgröße hervorgerufene fluktuierende Messwerte x0, x1, x2, x3, x4, x5, x6, x7, x8, x9, x10, x11, x12 zu fehlerhaften Bestimmungen eines Füllstands 109 oder einer Änderung des Füllstands 109 führen, können die Änderungen der Messwerte x0, x1, x2, x3, x4, x5, x6, x7, x8, x9, x10, x11, x12 mit einem Stabilisationsterm versehen werden. Hierzu werden Änderungen von Messwerten x0, x1, x2, x3, x4, x5, x6, x7, x8, x9, x10, x11, x12 nur dann zur Bestimmung der entsprechenden Änderungsraten Dx12, Dx34 herangezogen, wenn die Messwerte x0, x1, x2, x3, x4, x5, x6, x7, x8, x9, x10, x11, x12 auf dem geänderten Niveau für eine Dauer des vorbestimmten Zeitintervalls Dt konstant, bzw. innerhalb eines Toleranzbandes bleiben.

Ferner können die zur Bestimmung der Änderungsraten Dx12, Dx34 herangezogenen Messwerte x0, x1, x2, x3, x4, x5, x6, x7, x8, x9, x10, x11, x12 auf einen Referenzmesswert xR normiert werden. Vorzugsweise ist dieser Referenzmesswert xR ein Wert für die Messgröße X, der für einen leeren, Füllmittel-freien Füllmittelbehälter 105 aufgenommen wurde. Die Normierung ermöglicht die Füllmittel-unabhängige Bestimmung des Füllstands 107.

Darüber hinaus können Messwerte x0 vernachlässigt werden, die oberhalb eines vorbestimmten Schwellwerts xS liegen. Vorzugsweise ist der Schwellwert xS ein prozentualer Anteil des Referenzmesswerts xR. Messwerte x0, die den Schwellwert xS überschreiten, entsprechen einem Messwert für Luft und können daher vernachlässigt werden. Hierdurch kann die Anzahl der für die Analyse zu berücksichtigenden Messwerte x1, x2, x3, x4, x5, x6, x7, x8, x9, x10, x11, x12 verringert und damit die Analyse beschleunigt und erleichtert werden.

Die Analyseergebnisse des Prozessors 103 werden an die Anzeigeeinrichtung 111 übermittelt, welche die Ergebnisse entsprechend darstellt.

Bei Detektion einer Änderung des Füllstands 109 durch den Prozessor 103 wird eine entsprechende Nachricht durch die Anzeigeeinrichtung 111 ausgegeben.

Die Anzeigeeinrichtung 111 kann insbesondere eine optische und/oder akustische Anzeigeeinrichtung 111 sein. Mittels der Anzeigeeinrichtung 111 kann dem Nutzer der Sensorvorrichtung 100 der Füllstand 109 des Füllmittels 107 oder ein Hinweis auf die Änderungsrate oder auf einen Füllstand 109 des Füllmittels 107 angezeigt werden, insbesondere kann dem Nutzer eine visuelle Darstellung in Form eines Funktionsgrafen oder in Form entsprechender Zahlenwerte des Füllstands 109 oder einer Änderung des Füllstands 109 angezeigt werden. Abweichend kann dem Nutzer auch ein zeitlicher Verlauf des Füllstands 109 angezeigt werden. Alternativ kann dem Nutzer eine Änderung des Füllstands 109 in Form eines akustischen Signaltons angezeigt werden, sodass der Nutzer eine unbeabsichtigte Änderung in Form eines Alarms angezeigt bekommt und der Nutzer gegebenenfalls eine entsprechende Fehlfunktion beheben kann.
Nach einer Ausführungsform kann die Messgröße X eine elektrische Leitfähigkeit, ein Absorptionsvermögen und/oder Reflexionsvermögen von elektromagnetischer Strahlung, eine Resonanzfrequenz, eine Dichte, ein Druck, eine Feuchtigkeit, eine Schallleitfähigkeit, eine Dielektrizitätskonstante oder eine vergleichbare Messgröße, die geeignet ist, ein Füllmittel 107 in einem Füllmittelbehälter zu detektieren sein. Vorzugsweise wird eine Messgröße gewählt, die eine Füllmittel-unabhängige Beobachtung des Füllstands 109 erlaubt, oder aber die Beobachtung für einen breiten Bereich verschiedener Füllmittel 107 ermöglicht.

Das Füllmittel 107 kann eine Flüssigkeit oder ein Granulat oder ein Futtermittel oder Pellets oder Pulver oder ein vergleichbares Füllmittels sein.

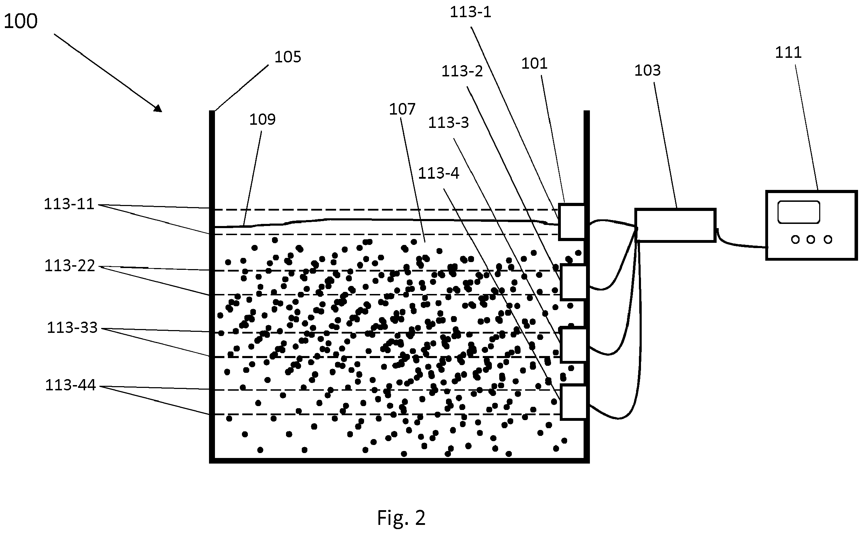

In Fig. 2 ist eine schematische perspektivische Ansicht der Sensorvorrichtung 100 gemäß einer weiteren Ausführungsform gezeigt.

Gemäß Fig. 2 kann die Sensorvorrichtung 100 eine Mehrzahl von Sensoren 101-1, 101-2, 101-3, 101-4 aufweisen, die jeweils in verschiedenen Höhen 113-1, 113-2, 113-3, 113-4 am Füllmittelbehälter 105 ausgebildet sind und jeweils verschiedene Höhenbereiche 113-11, 113-22, 113-33, 113-44 des Füllmittelbehälters 105 einsehen können. Hierüber kann erreicht werden, dass der Füllstand 109 oder eine Änderung des Füllstands 109 für verschiedene Höhen 113-1, 113-2, 113-3, 113-4 im Füllmittelbehälter 105 verfolgt werden kann. Dies ermöglicht eine umfassende Dokumentation des Verlaufs des Füllstands 109 über einen ausgedehnten Bereich des Füllmittelbehälters 105.

Der Prozessor ist hierbei ausgebildet, die durch die Mehrzahl von Sensoren 101-1, 101-2, 101-3, 101-4 aufgenommenen Messwerte x1, x2, x3, x4, x5, x6, x7, x8, x9, x10, x11, x12 separat auszuwerten, sodass für jeden Sensor 101-1, 101-2, 101-3, 101-4 und den entsprechenden Höhenbereiche 113-11, 113-22, 113-33, 113-44 des Füllmittelbehälters 105 separate Ergebnisse bezüglich des Füllstands 109 beziehungsweise bezüglich entsprechender Änderungen des Füllstands 109 erzielbar sind.

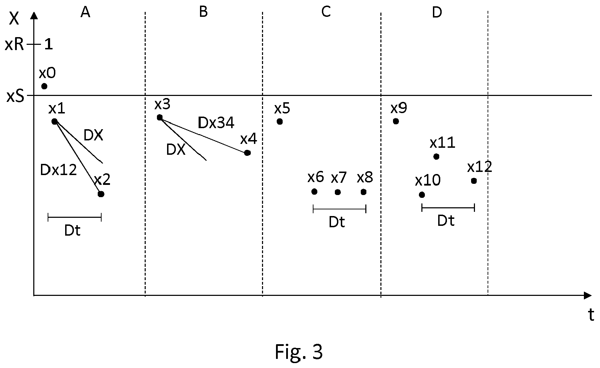

In Fig. 3 ist ein Messgröße-Zeit-Diagramm gezeigt, in dem verschiedenen Messwerte x0, x1, x2, x3, x4, x5, x6, x7, x8, x9, x10, x11, x12 der Messgröße X gegen die Zeit t aufgetragen sind. Die Messwerte sind auf den Referenzwerte xR normiert, der folglich dem Wert 1 entspricht.

Das Diagramm ist in vier Abschnitte A, B, C und D unterteilt, in denen jeweils unterschiedliche Aspekte der Erfindung erläutert sind. Die unterschiedlichen Abschnitte A, B, C und D des Diagramms sind voneinander unabhängig und lediglich zur besseren Übersichtlichkeit in einem Diagramm dargestellt.

Die in den Abschnitten A, B, C und D dargestellten Messwerte sind mit den Zeichen x0, x1, x2, x3, x4, x5, x6, x7, x8, x9, x10, x11, x12 markiert. Diese Zeichen stehen jedoch für beliebige Messwerte und dienen ausschließlich zur besseren Nachvollziehbarkeit der Fig. 3. Eine Einschränkung der Erfindung auf nur die dargestellten Messwerte x0, x1, x2, x3, x4, x5, x6, x7, x8, x9, x10, x11, x12 ist nicht beabsichtigt.

Die Änderungsraten in Fig. 3 sind mit Dx12 und Dx34 dargestellt. Die verwendeten Indizes 12 bei Dx12 und 34 bei Dx34 dienen hierbei ebenfalls ausschließlich der besseren Darstellbarkeit. Die Änderungsraten Dx12 und Dx34 sind wiederum nicht auf die Änderungen der Messwert x1, x2 und x3, x4 beschränkt, sondern stehen synonym für Änderungen von aufeinanderfolgenden Messwerten.

In Abschnitt A sind Messwerte x0, x1 und x2 dargestellt. Der Messwert x0 liegt oberhalb des Schwellwerts xS und wird folglich für die Analyse nicht berücksichtigt. Die Messwerte x1 und x2 liegen jeweils unterhalb des Schwellwerts xS, entsprechen somit einem Messwert für Füllmittel 107 und werden in der Analyse berücksichtigt. Die Messwerte x1 und x2 liegen auf unterschiedliche Niveaus und begründen die Änderungsrate Dx12. Die Änderungsrate Dx12 ist vom Betrag her größer als der Schwellwert DX, was durch die unterschiedlichen Steigungen der Geraden DX und Dx12 dargestellt ist. Somit könnte durch die Messwerte x1 und x2 eine tatsächliche Änderung des Füllstands 109 dargestellt sein. Durch die schnelle und prägnante Änderung der Messwerte und die damit verbundene prominente Änderungsrate kann eine Messwertänderung aufgrund gradueller spezifischer Veränderung Grenzschicht-naher Schichten des Füllmittels 107 und der Luft ausgeschlossen werden und die Änderung der Messgröße mit einer Änderung des Füllstands interpretiert werden. Das Vorzeichen der Änderungsrate Dx12 ist hierbei unerheblich. Ausschlaggebend ist die betragsmäßige Größe der Änderungsrate Dx12. Somit kann ein Ansteigen wie auch ein Abfallen des Füllstands 109 detektiert werden.

In dem Abschnitt B sind die Messwerte x3 und x4 dargestellt, die wiederum auf zwei unterschiedlichen Niveaus liegen. Vorliegend ist die Änderungsrate Dx34 aber vom Betrag her kleiner als der Schwellwert DX. Somit wird durch die Messwerte x3 und x4 nicht eine Änderung des Füllstands 109 interpretiert, sondern ist auf andere Effekte zurückzuführen.

In Abschnitt C sind die Messwerte x5, x6, x7 und x8 dargestellt. Die Messwerte x5 und x6 liegen wiederum auf unterschiedlichen Niveaus und weisen eine Änderungsrate auf, die den Schwellwert DX überschreitet. Die Änderungsrate der Messwerte x5 und x6 ist nicht in Abschnitt C dargestellt, ist durch Vergleich mit Abschnitten A und B aber ersichtlich. Durch die Messwerte x5 und x6 könnte somit eine Änderung des Füllstands 109 dargestellt sein. Ferner sind die Messwerte x7 und x8 ebenfalls auf dem Niveau des Messwerts x6 angeordnet. Indem die Messwerte x6, x7 und x8 somit für den Zeitraum des Zeitintervalls Dt auf dem Niveau des Messwerts x6 konstant oder in einem entsprechenden Toleranzband bleiben, ist das Stabilitätskriterium erfüllt und die durch die Messwerte x6, x7, x8 definierte Änderung entspricht damit einer tatsächlichen Änderung der Messgröße X, die aufgrund der den Schwellwert DX übersteigenden Änderungsrate mit einer Änderung des Füllstands 109 des Füllmittels 107 zu interpretieren ist.

In Abschnitt D sind die Messwerte x9, x10, x11 und x12 dargestellt. Die Messwerte x9 und x10 definieren wiederum eine Änderungsrate (nicht dargestellt), die betragsmäßig größer als der Schwellwert DX ist. Durch die Messwerte x9 und x10 könnte somit eine Änderung des Füllstands 109 dargestellt sein. Die Messwerte x11 und x12 sind jedoch nicht wie in Abschnitt C auf dem Niveau des Messwerts x10 angeordnet, sodass hierdurch das Stabilitätskriterium nicht erfüllt ist, da das Niveau des Messwerts x10 nicht für den Zeitraum des Zeitintervalls Dt durch die Messwerte x11 und x12 gehalten wird. Die Änderungen der Messwerte x10, x11 und x12 werden durch den Prozessor folglich nicht als tatsächliche Änderung der Messgröße X, sondern als Fluktuationen der Messwerte wahrgenommen. Eine Änderung des Füllstands 109 wird folglich nicht angezeigt.

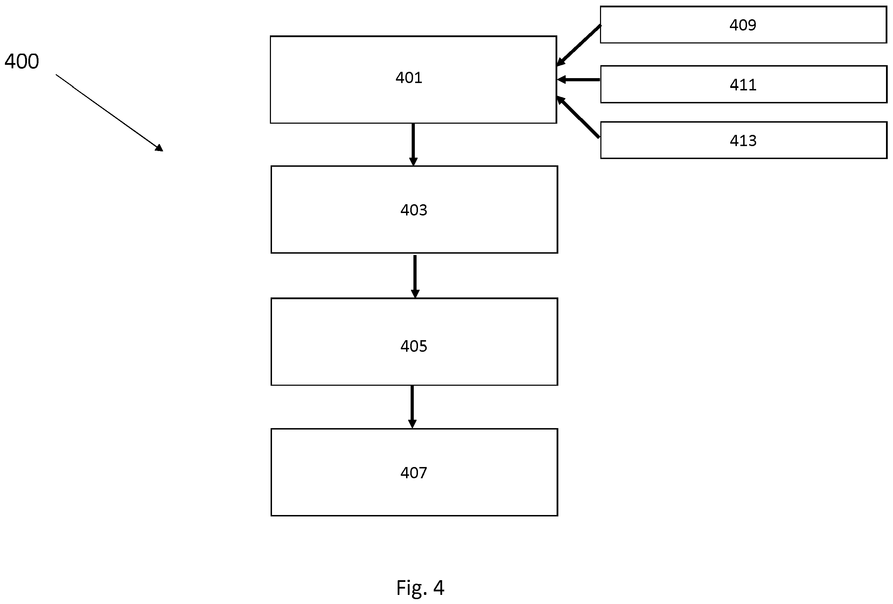

In Fig. 4 ist ein Blockdiagramm des Verfahrens 400 zum Erfassen einer Änderung eines Füllstandes 109 eines Füllmittels 107 in einem Füllmittelbehälter 105 gemäß einer Ausführungsform gezeigt.

Das Verfahren 400 zum Erfassen einer Änderung eines Füllstandes 109 eines Füllmittels 107 in einem Füllmittelbehälter 105 umfasst den Verfahrensschritt des Erfassens 401 von Messwerten x0, x1, x2, x3, x4, x5, x6, x7, x8, x9, x10, x11, x12 einer Messgröße X, um eine Mehrzahl von erfassten Messwerten x0, x1, x2, x3, x4, x5, x6, x7, x8, x9, x10, x11, x12 zu erhalten, wobei ein Wert der Messgröße X von dem Füllstand 109 des Füllmittels 107 abhängig ist.

Gemäß einer Ausführungsform umfasst der Schritt des Erfassens 401 von Messwerten x0, x1, x2, x3, x4, x5, x6, x7, x8, x9, x10, x11, x12 einer Messgröße X das Normieren 409 der erfassten Messwerte x0, x1, x2, x3, x4, x5, x6, x7, x8, x9, x10, x11, x12 auf den Referenzmesswert xR, sprich auf einen Messwert der Messgröße X bei Füllmittel-freiem Füllmittelbehälter 101.

Ferner kann der Schritt des Erfassens 401 von Messwerten x0, x1, x2, x3, x4, x5, x6, x7, x8, x9, x10, x11, x12 einer Messgröße X den Schritt des Ermittelns 411 umfassen, ob zumindest zwei aufeinanderfolgende erfasste Messwerte x0, x1, x2, x3, x4, x5, x6, x7, x8, x9, x10, x11, x12 innerhalb des vorbestimmten Zeitintervalls Dt gleich sind. Hierdurch wird das Stabilitätskriterium berücksichtigt, das eine bestimmte zeitliche Dauer vorsieht, in der die jeweilig aufgenommenen Messwerte x0, x1, x2, x3, x4, x5, x6, x7, x8, x9, x10, x11, x12, das geänderte Niveau bestätigen.

Darüber hinaus kann der Schritt des Erfassens 401 von Messwerten x0, x1, x2, x3, x4, x5, x6, x7, x8, x9, x10, x11, x12 einer Messgröße X den Schritt des Verwerfens 413 derjenigen Messwerte x0 umfassen, welche den vorbestimmten Schwellwert xS überschreiten. Somit werden nur die Messwerte x1, x2, x3, x4, x5, x6, x7, x8, x9, x10, x11, x12 für die Analyse berücksichtigt, die einem Messwert für Füllmittel entsprechen, während die Messwerte x0, die einem Messwert für Luft entsprechen, unberücksichtigt bleiben. Hierdurch wird die Anzahl aufgenommener Messwerte x0, x1, x2, x3, x4, x5, x6, x7, x8, x9, x10, x11, x12 für die Analyse beschränkt und diese damit vereinfacht und beschleunigt.

Ferner umfasst das Verfahren 400 den Schritt des Bestimmens 403 der Änderungsrate Dx12, Dx34 der Messgröße X innerhalb des vorbestimmten Zeitintervalls Dt anhand der Mehrzahl der erfassten Messwerte x1, x2, x3, x4, x5, x6, x7, x8, x9, x10, x11, x12.

Darauf folgend sieht das Verfahren 400 den Schritt des Vergleichens 405 der bestimmten Änderungsrate Dx12, Dx34 mit dem vorbestimmten Schwellwert DX vor, in dem geprüft wird, ob die zeitliche Änderung der Messgröße X, sprich der Gradient der Messgröße, ausreichend groß genug ist, sodass die Änderung der Messgröße X als eine Änderung des Füllstands interpretiert werden kann.
Abschließend umfasst das Verfahren 400 den Schritt des Ausgebens 407 eines Änderungssignals, falls die Änderungsrate Dx12, Dx34 den Schwellwert DX erreicht. Änderungen der Messgröße X, die ausreichend groß und schnell genug sind, sodass die entsprechende Änderungsrate Dx12, Dx34 größer als der Schwellwert DX ist, werden als eine Änderung des Füllstands 109 des Füllmittels 107 interpretiert. Änderungen der Messgröße X, die nicht ausreichend groß und schnell genug sind, dass die entsprechende Änderungsrate Dx12, Dx34 größer als der Schwellwert DX ist, werden hingegen nicht als eine Änderung des Füllstands 109 des Füllmittels 107 interpretiert und führen nicht zu der Ausgabe eines Änderungssignals.

## Patentansprüche

1. Sensorvorrichtung (100) zum Erfassen einer Änderung eines Füllstandes (109) eines Füllmittels (107) in einem Füllmittelbehälter (105), mit:
- einem Sensor (101), welcher ausgebildet ist, Messwerte (x0, x1, x2, x3, x4, x5, x6, x7, x8, x9, x10, x11, x12) einer Messgröße (X) zu erfassen, um eine Mehrzahl von erfassten Messwerten (x0, x1, x2, x3, x4, x5, x6, x7, x8, x9, x10, x11, x12) zu erhalten, wobei ein Wert der Messgröße (X) von dem Füllstand (109) des Füllmittels (107) abhängig ist;
- einem Prozessor (103), welcher ausgebildet ist, eine Änderungsrate (Dx12, Dx34) der Messgröße (X) innerhalb eines vorbestimmten Zeitintervalls (Dt) anhand der Mehrzahl der erfassten Messwerte (x0, x1, x2, x3, x4, x5, x6, x7, x8, x9, x10, x11, x12) zu bestimmen, wobei der Prozessor (103) ferner ausgebildet ist, die bestimmte Änderungsrate (Dx12, Dx34) mit einem vorbestimmten Schwellwert (DX) zu vergleichen und ein Änderungssignal auszugeben, falls die Änderungsrate (Dx12, Dx34) den vorbestimmten Schwellwert (DX) erreicht.

2. Sensorvorrichtung (100) nach Anspruch 1, wobei der Prozessor (103) ausgebildet ist, das Änderungssignal nur dann auszugeben, wenn zumindest zwei aufeinanderfolgende erfasste Messwerte (x0, x1, x2, x3, x4, x5, x6, x7, x8, x9, x10, x11, x12) oder wenn aufeinanderfolgende erfasste Messwerte (x0, x1, x2, x3, x4, x5, x6, x7, x8, x9, x10, x11, x12) innerhalb des vorbestimmten Zeitintervalls (Dt) oder innerhalb eines Toleranzbandes gleich sind.

3. Sensorvorrichtung (100) nach einem der vorstehenden Ansprüche, wobei der Sensor (101) oder der Prozessor (103) ausgebildet sind, die Mehrzahl der erfassten Messwerte (x0, x1, x2, x3, x4, x5, x6, x7, x8, x9, x10, x11, x12) auf einen Referenzmesswert zu normieren.

4. Sensorvorrichtung (100) nach Anspruch 3, wobei der Referenzmesswert ein Messwert der Messgröße (X) bei Füllmittel-freiem Füllmittelbehälter (105) ist.

5. Sensorvorrichtung (100) nach einem der vorstehenden Ansprüche, wobei der Sensor (101) oder der Prozessor (103) ausgebildet ist, diejenigen erfassten Messwerte (x0, x1, x2, x3, x4, x5, x6, x7, x8, x9, x10, x11, x12) zu verwerfen, welche einen vorbestimmten Schwellwert (xS) überschreiten.

6. Sensorvorrichtung (100) nach Anspruch 5, wobei der vorbestimmte Schwellwert (xS) von einem Messwert der Messgröße (X), insbesondere von einem Anteil dieses Messwertes (X), bei Füllmittel-freiem Füllmittelbehälter (105) ist.

7. Sensorvorrichtung (100) nach einem der vorangehenden Ansprüche, wobei der Prozessor (103) ferner ausgebildet ist, ein Änderungssignal nur dann auszugeben, wenn die Änderungsrate (Dx12, Dx34) einen vorbestimmten Änderungsratenverlauf aufweist, insbesondere einen Änderungsratenverlauf mit einer vorbestimmten, insbesondere mit einer negativen, Steigung.

8. Sensorvorrichtung (100) nach einem der vorangehenden Ansprüche, wobei die Messgröße (X) eine elektrische Leitfähigkeit, ein Absorptionsvermögen und/oder Reflexionsvermögen von elektromagnetischer Strahlung, eine Resonanzfrequenz, eine Dichte, ein Druck, eine Feuchtigkeit, eine Schallleitfähigkeit, eine Dielektrizitätskonstante oder vergleichbares ist.

9. Sensorvorrichtung (100) nach einem der vorangehenden Ansprüche, wobei das Füllmittel (107) eine Flüssigkeit oder ein Granulat oder ein Futtermittel oder Pellets oder Pulver ist.

10. Sensorvorrichtung (100) nach einem der vorangehenden Ansprüche, welche ferner eine Anzeigeeinrichtung (111), insbesondere eine optische und/oder akustische Anzeigeeinrichtung (111), umfasst, welche ausgebildet ist, einen Hinweis auf die Änderungsrate oder auf einen Füllstand (109) des Füllmittels (107) anzuzeigen.

11. Sensorvorrichtung (100) nach einem der vorangehenden Ansprüche, wobei der Sensor (101) in einer ersten Höhe (113-1) in dem Füllmittelbehälter (105) angeordnet und vorgesehen ist, die Änderung des Füllstandes (109) in einem ersten Höhenbereich (113-11) des Füllbehälters (101) zu erfassen, und wobei die Sensorvorrichtung (100) einen zweiten Sensor (101-2) aufweist, welcher in einer zweiten Höhe (113-2) des Füllmittelbehälters (101) angeordnet und vorgesehen ist, zweite Messwerte (x0, x1, x2, x3, x4, x5, x6, x7, x8, x9, x10, x11, x12) der Messgröße (X) in einem zweiten Höhenbereich (113-22) zu erfassen, um eine zweite Mehrzahl von erfassten zweiten Messwerten (x0, x1, x2, x3, x4, x5, x6, x7, x8, x9, x10, x11, x12) zu erhalten, wobei ein Wert der Messgröße (X) von dem Füllstand (109) des Füllmittels (107) abhängig ist; wobei der Prozessor (103) ausgebildet ist, eine Änderungsrate (Dx12, Dx34) der Messgröße (X) innerhalb eines weiteren vorbestimmten Zeitintervalls (Dt) anhand der zweiten Mehrzahl der erfassten zweiten Messwerte (x0, x1, x2, x3, x4, x5, x6, x7, x8, x9, x10, x11, x12) zu bestimmen, wobei der Prozessor (103) ferner ausgebildet ist, die bestimmte Änderungsrate (Dx12, Dx34) mit dem vorbestimmten Schwellwert (DX) zu vergleichen und das Änderungssignal auszugeben, falls die Änderungsrate (Dx12, Dx34) den Schwellwert (DX) erreicht.

12. Verfahren (400) zum Erfassen einer Änderung eines Füllstandes (109) eines Füllmittels (107) in einem Füllmittelbehälter (101), mit den Schritten:
- Erfassen (401) von Messwerten (x0, x1, x2, x3, x4, x5, x6, x7, x8, x9, x10, x11, x12) einer Messgröße (X), um eine Mehrzahl von erfassten Messwerten (x0, x1, x2, x3, x4, x5, x6, x7, x8, x9, x10, x11, x12) zu erhalten, wobei ein Wert der Messgröße (X) von dem Füllstand (109) des Füllmittels (107) abhängig ist;
- Bestimmen (403) einer Änderungsrate (Dx12, Dx34) der Messgröße (X) innerhalb eines vorbestimmten Zeitintervalls (Dt) anhand der Mehrzahl der erfassten Messwerte (x0, x1, x2, x3, x4, x5, x6, x7, x8, x9, x10, x11, x12);
- Vergleichen (405) der bestimmten Änderungsrate (Dx12, Dx34) mit einem vorbestimmten Schwellwert (DX); und
- Ausgeben (407) eines Änderungssignals, falls die Änderungsrate (Dx12, Dx34) den vorbestimmten Schwellwert (DX) erreicht.

13. Verfahren (400) nach Anspruch 12, wobei der Schritt des Erfassens (401) von Messwerten (x0, x1, x2, x3, x4, x5, x6, x7, x8, x9, x10, x11, x12) einer Messgröße (X) das Normieren (409) der erfassten Messwerte (x0, x1, x2, x3, x4, x5, x6, x7, x8, x9, x10, x11, x12) auf einen Referenzmesswert (xR) umfasst, und wobei der Referenzmesswert (xR) ein Messwert der Messgröße bei Füllmittel-freiem Füllmittelbehälter (101) ist.

14. Verfahren (400) nach Anspruch 12 oder 13, wobei der Schritt des Erfassens (401) von Messwerten (x0, x1, x2, x3, x4, x5, x6, x7, x8, x9, x10, x11, x12) einer Messgröße (X) das Ermitteln (411) umfasst, ob zumindest zwei aufeinanderfolgende erfasste Messwerte (x0, x1, x2, x3, x4, x5, x6, x7, x8, x9, x10, x11, x12) innerhalb des vorbestimmten Zeitintervalls (Dt) gleich sind.

15. Verfahren (400) nach Anspruch 12, 13 oder 14, wobei der Schritt des Erfassens (401) von Messwerten (x0, x1, x2, x3, x4, x5, x6, x7, x8, x9, x10, x11, x12) einer Messgröße (X) das Verwerfen (413) derjenigen Messwerte (x0) umfasst, welche einen vorbestimmten Schwellwert (xS) überschreiten, und wobei der vorbestimmte Schwellwert (xS) von einem Messwert der Messgröße (X) bei Füllmittel-freiem Füllmittelbehälter abhängig, insbesondere ein Anteil des Messwertes der Messgröße (X) bei Füllmittel-freiem Füllmittelbehälter (101) ist.
